# EUROPÄISCHE PATENTSCHRIFT

(11) **EP 2 910 103 B1**
(45) Veröffentlichungstag und Bekanntmachung des Hinweises auf die Patenterteilung: **03.01.2018**
(21) Anmeldenummer: 15154943.3
(22) Anmeldetag: 13.02.2015
(51) Int. Cl.: A01D 90/04, A01F 15/10

(54) **Schneidwerk für eine Erntemaschine**
Cutting assembly for an agricultural harvester
Dispositif de coupe pour une moissonneuse

(30) Priorität: 25.02.2014 DE 102014102391
(43) Veröffentlichungstag der Anmeldung: 26.08.2015
(73) Patentinhaber: CLAAS Saulgau GmbH, 88348 Bad Saulgau (DE)
(72) Erfinder: Birkhofer, Stefan, 78333 Stockach (DE)

(56) Entgegenhaltungen:
- EP-A1- 0 748 583
- EP-A1- 0 806 134
- DE-A1-102011 013 242
- DE-U1- 8 631 062
- DE-U1- 29 509 433

## Beschreibung

Die Erfindung betrifft ein gemäß dem Oberbegriff des Anspruchs 1 ausgebildetes Schneidwerk für eine Erntemaschine wie insbesondere einen Ladewagen oder eine Ballenpresse.

Aus DE 86 31 062 U1 ist ein Schneidwerk für Ladewagen mit einer Vielzahl von in ihrer Schneidstellung in einen Förderkanal hineinragenden Messern bekannt, die in wenigstens einer Reihe angeordnet und um je ein Messerschwenklager verschwenkbar sind und die in ihrer Schneidstellung mittels je einem, in eine Rastausnehmung des Messers eingreifenden, federbelasteten Rastelement an einem schwenkbaren Messerhebel gehalten werden und zur Fremdkörperabsicherung entgeqen der Federbelastung vorübergehend aus dem Förderkanal einzeln verschwenkbar sind, sowie durch eine, zumindest auf eine Teilanzahl der Messerhebel wirkende Schaltvorrichtung in eine Außereingriffsstellung verbringbar sind, wobei an den von den Messern abgewandten Enden der Messerhebel je ein Drehgelenk vorgesehen ist, dessen Lage gegenüber dem Messerschwenkgelenk durch die mit dem Drehgelenk verbundene Schaltvorrichtung in der Schneidstellung der Messer feststellbar ist und zur Außereingriffsstellung der Messer veränderbar ist, wobei das Rastelement zusammen mit dem Messer auf einem Schwenkkreis um das Messerschwenklager bewegbar ist.

DE 295 09 433 U1 offenbart eine Rundballenpresse für Erntegut, mit einem im Zuführweg in die Presskammer angeordneten Schneidwerk, in dem in einem Schneidrahmen mit einem Messerträger mehrere nebeneinanderliegende Messer gehaltert sind, die zwecks Verstellung aus wenigstens einer Schneidposition in eine Passivposition vom Messerträger lösbar sind, wobei die Messer zwischen einer steilen Schneidposition und wenigstens einer flacheren Schneidposition um eine Halteachse hin und her verstellbar mit dem Messerträger gehaltert sind.

EP 748 583 A1 zeigt einen Mähdrescher mit einer Häckseleinrichtung für Stroh, die als Axialflusshäckseleinrichtung ausgebildet ist und innerhalb eines definierten Bereiches der Förderstrecke eines Trennrotors einer Trenneinrichtung liegt, wobei zum Häckseln des Strohes die Förderelemente des Trennrotors über den definierten Bereich mit im Abstand zueinander stehenden, außenseitig offenen Radialschlitzen versehen sind, wobei auf mindestens einer Aufnahmeachse im Abstand zueinander stehende, in der Umlaufbahn der Förderelemente liegende Häckselmesser derart angeordnet sind, dass jedes Häckselmesser für den Schneidvorgang kurzzeitig innerhalb des jeweiligen Radialschlitzes liegt.

EP 806 134 A1 offenbart einen Mähdrescher mit Strohschüttlern und einer den Schüttlern nachgeordneten Häckseltrommel mit zugehörigen Gegenmessern zur Zerkleinerung des ausgedroschenen Strohs, wobei unterhalb der Häckseltrommel eine Breitverteileinrichtung für das zerkleinerte Stroh angeordnet ist, und wobei die Häckseltrommel in Höhe des Abgabeendes der Strohschüttler angeordnet ist und aus parallel mit Abstand zueinander auf einem über eine Welle im Mähdreschergehäuse gelagertem Trommelmantel positionierten Tragringen und zugehörigen an die Stelle bisher bekannter Schlegelmesser tretenden Schlagplatten besteht, wobei an den Schüttlerenden vorgesehene Übergabeleisten ebenso in den Ringspalt zwischen den Tragringen eingreifen wie die im Bereich der Mähdrescherabschlusshaube bei Überlast ausweichbar angeordneten Gegenmesser.

Ein Schneidwerk der eingangsgenannten Art ist z.B. aus EP 2 540 151 B1 bekannt. Bei diesem Schneidwerk stehen in Längsrichtung der Fördertrommel mit jeweiligem Abstand voneinander nebeneinanderliegend angeordnete verschwenkbare Wendeschneidmesser in einer Schneidposition dieser durch das Leitelement hindurch im Wesentlichen freistehend in den zwischen Fördertrommel und Leitelement gebildeten Förderkanal hinein vor. Die Wendeschneidmesser weisen dabei jeweils in etwa eine Dreiecksform auf, wobei an zwei Seiten der Dreiecksform zwei konkav gekrümmte Schneiden gebildet sind, die in einer stumpfen Spitze als einer Ecke der Dreiecksform zusammenlaufen.

Durch diese Ausgestaltung der Wendeschneidmesser liegt sowohl die aktive Schneide als auch die inaktive zum Wenden bestimmte Schneide im Betrieb des Schneidwerks im Erntegutfluss, so dass es auch bei der inaktiven Schneide zu Verschleißerscheinungen kommt. Durch die im Wesentlichen freistehende Anordnung der Wendeschneidmesser sind diese sehr anfällig gegen durch Fremdkörper verursachte Verformungen. Zudem liegt in der Schneidposition die zum Hindurchführen des jeweiligen Wendeschneidmessers im Leitelement vorgesehene Öffnung im Bereich der erntegutflussabwärts gelegenen inaktiven Schneide frei, so dass Erntegut diesen Teil der Öffnung verstopfen und auf die der Fördertrommel abgewandte Seite des Leitelements in die Schneidwerksmechanik gelangen kann. Schließlich kann sich, da in der Schneidposition zwischen der erntegutflussabwärts gelegenen inaktiven Schneide und dem Leitelement ein Zwickel gebildet ist, in diesem Zwickel Erntegut ansammeln. Alle diese Probleme können den Betrieb des Schneidwerks erheblich stören und damit die Betriebszuverlässigkeit des Schneidwerks beeinträchtigen.

Der Erfindung liegt daher die Aufgabe zugrunde, ein gemäß dem Oberbegriff des Anspruchs 1 ausgebildetes Schneidwerk für eine Erntemaschine, wie insbesondere einen Ladewagen oder eine Ballenpresse, bereitzustellen, so dass das Schneidwerk eine erhöhte Betriebszuverlässigkeit aufweist.

Dies wird mit einem Schneidwerk gemäß Anspruch 1 erreicht. Weiterbildungen der Erfindung sind in den abhängigen Ansprüchen definiert.

Gemäß der Erfindung weist ein Schneidwerk für eine Erntemaschine, wie insbesondere einen Ladewagen oder eine Ballenpresse, auf: eine Fördertrommel, die drehbar gelagert ist und die um einen Außenumfang und in einer Längsrichtung dieser verteilt eine Mehrzahl von nach radial außen vorstehenden Förderelementen aufweist, welche zusammen einen Hüllzylinder der Fördertrommel definieren; ein Leitelement, das sich so über eine Länge des Hüllzylinders und bogenförmig um einen Sektor eines Außenumfangs des Hüllzylinders erstreckt, dass zwischen dem Außenumfang der Fördertrommel und dem Leitelement ein Förderkanal für Erntegut gebildet ist; und mindestens eine Schneideinheit mit einem länglichen bevorzugt plattenförmigen Schneidmesser, das sich in einer Schneidposition dessen von einer der Fördertrommel abgewandten Seite des Leitelements aus längsseits und bevorzugt hochkant stehend durch eine Öffnung in dem Leitelement hindurch in den Förderkanal hinein erstreckt, um unter Zusammenwirkung mit den Förderelementen das Erntegut zu zerschneiden.

Das erfindungsgemäße Schneidwerk zeichnet sich dadurch aus, dass das Schneidmesser in seiner Schneidposition an einem in den Förderkanal hineinragenden ersten Längsende dessen in die Öffnung in dem Leitelement eingreift, so dass das erste Längsende des Schneidmessers in einer Längsrichtung der Fördertrommel beidseitig von dem Leitelement abgestützt ist.

Durch diese beidseitige Abstützung des Schneidmessers hat dieses eine höhere Stabilität gegen Verformungen durch in den Förderkanal gelangende Fremdkörper wie z.B. Steine. Somit können verformungsbedingte Verklemmungen des Schneidmessers sowie Schneidqualitätsreduzierungen besser vermieden werden und weist das Schneidwerk im Ergebnis eine erhöhte Betriebszuverlässigkeit auf.

Gemäß der Erfindung ist die Öffnung im Leitelement bevorzugt als im Wesentlichen vertikal verlaufender Schlitz im Leitelement ausgebildet, wobei der Schlitz in Breite und Länge so auf die Abmessungen des Schneidmessers abgestimmt ist, dass zwischen Schneidmesser und den Rändern des Schlitzes nur geringer Abstand vorhanden ist. Dies verhindert das Eindringen von Partikeln in die Öffnung und das Hindurchdringen dieser über die Öffnung zu der der Fördertrommel abgewandten Seite des Leitelements.

Gemäß der Erfindung ist das Leitelement bevorzugt als ein Gehäuseteil des Schneidwerks, insbesondere als ein eine Schneidwerksmechanik gegen den Förderkanal abschirmendes Bodenblech des Schneidwerks, ausgebildet.

Gemäß der Erfindung weist das Schneidmesser an einer der Fördertrommel zugewandten ersten Längsseite dessen eine in den Förderkanal hineinragende Schneide auf, die eine vorbestimmte Längenabmessung entlang der ersten Längsseite hat, wobei das Schneidmesser entlang der Längenabmessung der Schneide in die Öffnung in dem Leitelement eingreift, so dass das Schneidmesser entlang der Längenabmessung der Schneide in Längsrichtung der Fördertrommel beidseitig von dem Leitelement abgestützt ist.

Durch diese zusätzliche Abstützung im Bereich der Schneide hat das Schneidmesser eine noch höhere Stabilität gegen Verformungen durch in den Förderkanal gelangende Fremdkörper, womit verformungsbedingte Verklemmungen des Schneidmessers sowie Schneidqualitätsreduzierungen noch besser vermieden werden können. Damit wird die Betriebszuverlässigkeit des Schneidwerks noch weiter erhöht. Um die Abstützung und damit die Betriebszuverlässigkeit noch weiter zu Verbessern, steht das Schneidmesser bevorzugt über seine gesamte in den Förderkanal hineinragende Längenabmessung mit der Öffnung im Leitelement in Eingriff bzw. greift in diese ein.

Gemäß der Erfindung weist das Schneidmesser eine der Fördertrommel abgewandte zweite Längsseite auf, welche sich in der Schneidposition des Schneidmessers vollständig auf der der Fördertrommel abgewandten Seite des Leitelements befindet.

Durch diese Ausgestaltung der Erfindung ist, wenn wie gemäß einer Ausführungsform der Erfindung an der zweiten Längsseite des Schneidmessers bezüglich einer Längsmittelachse dessen spiegelsymmetrisch zur in den Förderkanal hineinragenden ersten Schneide eine zweite Schneide vorgesehen ist, d.h. das Schneidmesser als Wendeschneidmesser ausgebildet ist, diese zweite Schneide im Betrieb des Schneidwerks nicht im Erntegutfluss angeordnet und kann somit durch das Leitelement abgeschirmt zuverlässig gegen Verschleiß und Verschmutzung geschützt werden.

Gemäß der Erfindung weist das Schneidmesser ein sich auf der der Fördertrommel abgewandten Seite des Leitelements befindendes zweites Längsende auf, wobei das Schneidmesser ausgehend von einer sich zwischen seinen ersten und zweiten Längsenden befindenden Zwischenposition (welche sich in einen Abstand vom zweiten Längsende befindet, der z.B. etwa 1/3 der Gesamtlänge des Schneidmessers beträgt) bis zu seinem ersten Längsende hin in Längsrichtung der Fördertrommel gesehen eine Rechteckform definiert, deren lange Seiten jeweils in einer der beiden Längsseiten des Schneidmessers enthalten sind. Durch diese Ausbildung des Schneidmessers in bevorzugt rechteckähnlicher Plattenform ist dieses außerordentlich robust bzw. stabil gegen Verformungen.

Außerdem wird durch die Rechteckform in Verbindung mit der vollständigen Anordnung der zweiten Längsseite des Schneidmessers auf der der Fördertrommel abgewandten Seite des Leitelements bewirkt, dass die Öffnung im Leitelement in der Schneidposition vollständig durch das Schneidmesser verschlossen ist und somit keine Partikel (wie z.B. geschnittenes Erntegut) in die Öffnung eindringen und durch diese hindurch auf die der Fördertrommel abgewandte Seite des Leitelements gelangen können. Zudem wird durch die Form und die Anordnung des Schneidmessers in der Schneidposition eine Zwickelausbildung zwischen der erntegutflussabwärts gelegenen Seite des Schneidmessers und dem Leitelement vermieden, wodurch Partikelansammlungen vermieden bzw. reduziert werden.

Gemäß der Erfindung ist das Schneidmesser an seinem zweiten Längsende auf einer sich in Längsrichtung der Fördertrommel bzw. parallel zu einer Drehachse der Fördertrommel erstreckenden Schwenkachse schwenkbar gelagert, so dass das Schneidmesser aus der Schneidposition heraus durch die Öffnung im Leitelement hindurch in Richtung zur der Fördertrommel abgewandten Seite des Leitelements hin z.B. in eine Ausweichposition bei Kontakt mit einem Fremdkörper im Förderkanal oder in eine Außerbetriebsposition bei Nichtverwendung des Schneidmessers verschwenkbar ist. Bevorzugt weist dabei eine das erste Längsende des Schneidmessers definierende kurze Seite der Rechteckform einen konvexen Krümmungsradius auf, welcher einem Schwenkradius des Schneidmessers um die Schwenkachse entspricht.

Durch die verschwenkbare Lagerung des Schneidmessers kann dieses einerseits im Betrieb vorteilhaft in den Förderkanal gelangten Fremdkörpern ausweichen, wodurch Beschädigungen des Schneidmessers vermieden bzw. reduziert werden können, und kann das Schneidmesser andererseits selektiv zum Schneiden in den Förderkanal hineingeschwenkt und zur verschleiß- und verschmutzungsgeschützten Verwahrung aus dem Förderkanal herausgeschwenkt werden. Durch den konvexen Krümmungsradius am ersten Längsende des Schneidmessers kann der zum ersten Längsende des Schneidmessers benachbarte Begrenzungsrand der Öffnung im Leitelement optimal nahe an das Längsende herangebracht werden, so dass dem Eindringen und Hindurchdringen von Partikeln in die und durch die Öffnung noch wirksamer entgegengewirkt werden kann.

Gemäß der Erfindung erstrecken sich die in den Förderkanal hineinragende erste Schneide und auch die bevorzugt vorgesehene zur ersten Schneide spiegelsymmetrisch ausgebildete zweite Schneide jeweils von der Zwischenposition aus bis zum ersten Längsende des Schneidmessers hin. Damit ist jede Schneide des Schneidmessers im sehr robust ausgeführten rechteckähnlichen Bereich des Schneidmessers angeordnet und somit außerordentlich stabil.

Gemäß einer Ausführungsform der Erfindung sind die in den Förderkanal hineinragende erste Schneide und damit auch die bevorzugt vorgesehene zur ersten Schneide spiegelsymmetrisch ausgebildete zweite Schneide entlang ihrer Längenabmessung jeweils konkav gekrümmt. Dies begünstigt die Schneidbedingungen für die jeweils schneidaktive Schneide und erhöht außerdem deren Stabilität gegen Beschädigungen. Bevorzugt weist dabei das Schneidmesser sowohl an der Zwischenposition als auch am ersten Längsende dessen die gleiche bevorzugt volle Breite auf.

Gemäß noch einer Ausführungsform der Erfindung weist die mindestens eine Schneideinheit einen Kniehebelmechanismus auf, welcher auf der der Fördertrommel abgewandten Seite des Leitelements angeordnet ist und welcher mit dem Schneidmesser verbunden ist, so dass das Schneidmesser von dem Kniehebelmechanismus in Schwenkrichtung zu seiner Schneidposition hin elastisch mit einer bevorzugt einstellbaren Vorspannkraft vorgespannt ist. Dies realisiert in vorteilhafter Weise insbesondere das elastische Ausweichen des Schneidmessers bei Kontakt dessen mit in den Förderkanal gelangten Fremdkörpern.

Bevorzugt weist der Kniehebelmechanismus zwei Kniehebel auf, welche über ein Knickgelenk an jeweiligen Längsenden dieser um eine sich in Längsrichtung der Fördertrommel erstreckende erste Kniehebelachse schwenkbar miteinander verbunden sind, wobei das Knickgelenk in einer Gestrecktstellung der Kniehebel auf Anschlag stellbar ist und der Kniehebelmechanismus über Vorspannmittel wie z.B. eine Feder oder einen Luftzylinder zum Anschlag des Knickgelenks hin in die Gestrecktstellung vorspannt ist.

Ein dem Knickgelenk abgewandtes Längsende des einen Kniehebels ist um eine zur ersten Kniehebelachse parallele zweite Kniehebelachse schwenkbar z.B. am Gehäuse des Schneidwerks festgelegt, und ein dem Knickgelenk abgewandtes Längsende des anderen Kniehebels ist um eine zur ersten Kniehebelachse parallele dritte Kniehebelachse schwenkbar mit einem drehfest an eine Messeraufnahme des Schneidmessers angebundenen Hebel verbunden, so dass ein in Richtung zur der Fördertrommel abgewandten Seite des Leitelements hin Verschwenken des Schneidmessers (in die Ausweichposition oder die Außerbetriebsposition) ein aus der Gestrecktstellung im Knickgelenk Einknicken der Kniehebel des Kniehebelmechanismus gegen die Vorspannung der Vorspannmittel bewirkt.

Gemäß noch einer weiteren Ausführungsform der Erfindung sind mehrere wie die mindestens eine Schneideinheit ausgebildete Schneideinheiten vorgesehen, welche in Längsrichtung der Fördertrommel mit jeweiligem Abstand voneinander nebeneinanderliegend in einer Reihe angeordnet sind, so dass sie bevorzugt die gesamte Arbeitslänge der Fördertrommel abdecken bzw. nutzen.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig.1: zeigt eine seitliche Schnittansicht eines Schneidwerks einer Erntemaschine gemäß einer Ausführungsform der Erfindung.
- Fig.2: zeigt eine perspektivische Seitenansicht des Schneidwerks von Fig. 1.

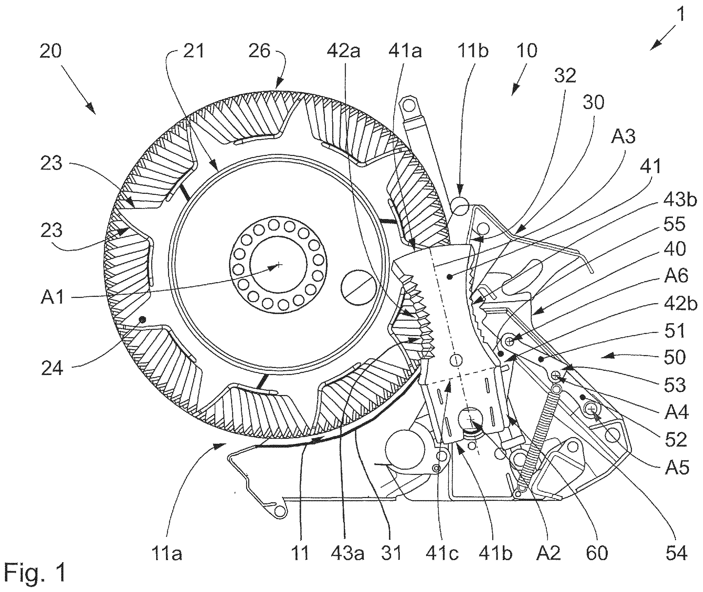

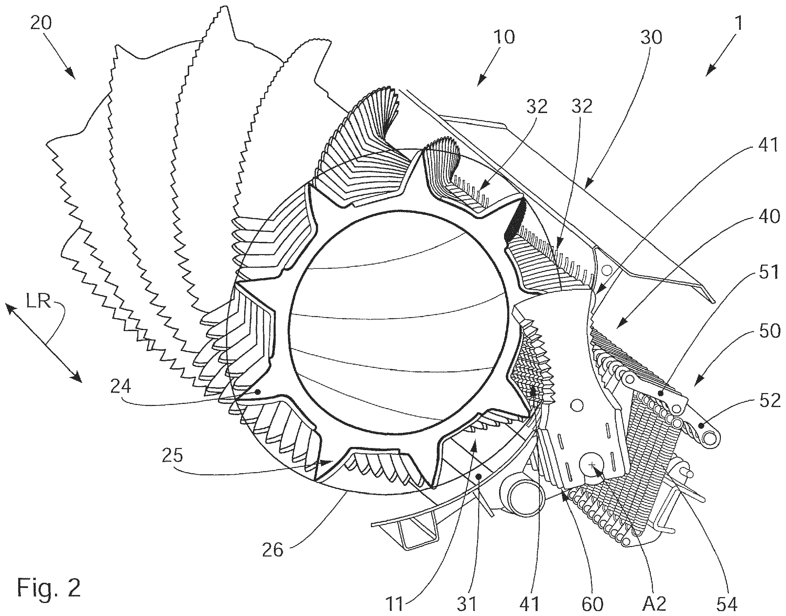

Die Figuren 1 und 2 zeigen ein Schneidwerk 10 einer Erntemaschine 1 (nicht vollständig dargestellt) gemäß einer Ausführungsform der Erfindung. Die Erntemaschine 1 ist bevorzugt als Ladewagen oder Ballenpresse ausgebildet, wobei dem Schneidwerk 10 eine Pickupeinrichtung (nicht dargestellt) mit z.B. einer Stachelwalze zur Aufnahme von nicht dargestelltem Erntegut (wie z.B. Gras oder anderes Halm- und/oder Blattgut) von einem landwirtschaftlichen Feld vorgelagert ist.

Das von der Pickupeinrichtung bzw. Aufnahmeeinrichtung aufgenommene Erntegut wird dann von dieser rotatorisch zu einem Eingang 11a eines Förderkanals 11 des Schneidwerks 10 gefördert und dort von einer Fördertrommel 20 des Schneidwerks 10 übernommen und entlang des Förderkanals 11 zum Zerschneiden weitergefördert. Nach dem Zerschneiden des Ernteguts wird dieses an einem Ausgang 11b aus dem Förderkanal 11 ausgegeben und dort z.B. von einer Presseinrichtung oder einer weiteren Fördereinrichtung (beide Letzteren nicht dargestellt) übernommen.

Im Detail weist das Schneidwerk 10 die Fördertrommel 20, ein Gehäuse 30 mit einem Leitelement 31 und eine Mehrzahl von Schneideinheiten 40 auf. Die Fördertrommel 20 ist um eine in einer Längsrichtung LR verlaufende Drehachse A1 drehbar am Gehäuse 30 gelagert und weist um einen Außenumfang 21 der Fördertrommel 20 und in deren Längsrichtung LR verteilt eine Mehrzahl von nach radial außen vorstehenden Förderelementen in Form von Mitnehmerzinken 24 auf, welche zusammen einen Hüllzylinder 26 (nur als Hüllkreis angedeutet, jedoch auch in Längsrichtung LR verlaufend) der Fördertrommel 20 definieren.

Genauer sind jeweils zwei metallische sternförmige Mitnehmerscheiben 23, die jeweils neun Mitnehmerzinken 24 gleichmäßig umfänglich verteilt aufweisen, umfänglich geringfügig zueinander versetzt zu einem Mitnehmerscheibenpaar 25 zusammengefügt. Auf dem Außenumfang 21 der Fördertrommel 20 sind wiederum entlang einer gesamten Arbeitslänge der Fördertrommel 20 eine Mehrzahl solcher Mitnehmerscheibenpaare 25 mit gleichmäßigem Abstand in Längsrichtung LR der Fördertrommel 20 voneinander und umfänglich so zueinander versetzt angeordnet, dass ihre Mitnehmerzinken 24 eine Schraubenkontur bzw. Wendelkontur auf der Fördertrommel 20 bilden, wie in Fig. 2 gezeigt.

Das Leitelement 31 des Gehäuses 30 ist als ein Bodenblech des Schneidwerks 10 ausgebildet und schirmt eine im Gehäuse 30 aufgenommene Schneidwerksmechanik (nicht separat bezeichnet) gegen den Förderkanal 11 ab. Das Leitelement 31 erstreckt sich dabei so in Längsrichtung LR der Fördertrommel 20 über eine gesamte Länge des Hüllzylinders 26 und bogenförmig um einen Sektor eines Außenumfangs des Hüllzylinders 26, dass zwischen dem Außenumfang 21 der Fördertrommel 20 und dem Leitelement 31 der Förderkanal 11 für das Erntegut gebildet ist.

Die Schneideinheiten 40 sind in Längsrichtung LR der Fördertrommel 20 mit jeweiligem Abstand voneinander nebeneinanderliegend in einer Reihe angeordnet, so dass sie die gesamte Arbeitslänge der Fördertrommel 20 abdecken bzw. nutzen. Jede der Schneideinheiten 40 weist ein längliches plattenförmiges Schneidmesser 41 aus Metall und einen Kniehebelmechanismus 50 zum Vorspannen des Schneidmessers 41 auf.

Jedes Schneidmesser 41 weist ein erstes Längsende 41a, ein zweites Längsende 41b, eine erste Längsseite 42a und eine zweite Längsseite 42b auf und erstreckt sich in einer in den Figuren 1 und 2 gezeigten Schneidposition dessen mit seinem zweiten Längsende 41b an einer am Gehäuse 30 gelagerten sich auf einer der Fördertrommel 20 abgewandten Seite des Leitelements 31 befindenden Schwenkachse A2 gelagert von der der Fördertrommel 20 abgewandten Seite des Leitelements 31 aus längsseits durch eine schlitzförmige Öffnung 32 in dem Leitelement 31 hindurch in den Förderkanal 11 hinein und greift dabei in den Abstand zwischen zwei benachbarten Mitnehmerscheibenpaaren 25 ein, um unter Zusammenwirkung mit deren Mitnehmerzinken (Förderelementen) 24 das durch den Förderkanal 11 hindurchgeförderte Erntegut zu zerschneiden. Das erste Längsende 41a ragt dabei in den Förderkanal 11 hinein.

Außerdem ist in der Schneidposition die erste Längsseite 42a des Schneidmessers 41 der Fördertrommel 20 zugewandt teilweise im Förderkanal 11 angeordnet, wohingegen die zweite Längsseite 42b des Schneidmessers 41 von der Fördertrommel 20 abgewandt vollständig auf der der Fördertrommel 20 abgewandten Seite des Leitelements 31 angeordnet ist.

Die Schneidmesser 41 sind jeweils als Wendeschneidmesser ausgebildet und über jeweilige Messeraufnahmen 60 einzeln zwischen der Schneidposition, einer Ausweichposition und einer Außerbetriebsposition verschwenkbar an der Schwenkachse A2 gelagert. Genauer ist jedes Schneidmesser 41 an seinem zweiten Längsende 41b über seine jeweilige Messeraufnahme 60 auf der sich in Längsrichtung LR bzw. in Richtung der Drehachse A1 der Fördertrommel 20 erstreckenden Schwenkachse A2 schwenkbar gelagert, so dass das Schneidmesser 41 aus der Schneidposition heraus durch die zugehörige Öffnung 32 im Leitelement 31 hindurch in Richtung zur der Fördertrommel 20 abgewandten Seite des Leitelements 31 hin in die Ausweichposition oder weiter in die Außerbetriebsposition verschwenkbar ist.

An den Messeraufnahmen 60 sind Führungen für die Schneidmesser 41 vorgesehen, die vorzugsweise so gegenüber der Längsmittelachse A3 der Schneidmesser 41 geneigt sind, dass sich beim Herausziehen der Schneidmesser 41 schon nach einem kurzen Weg ein seitlicher Spielraum ergibt, weil sich der Abstand der Führungen zueinander in Entnahmerichtung vergrößert. Dadurch werden das Entnehmen sowie das Einführen der Schneidmesser vorteilhaft erleichtert.

Die sich gegenüber liegenden Führungen schließen vorzugsweise einen nur kleinen Winkel - von beispielsweise 6° - ein.

Selbstverständlich können für die Schneidmesser 41 auch Rechteckführungen vorgesehen werden.

Jedes Schneidmesser 41 definiert ausgehend von einer sich zwischen seinen ersten und zweiten Längsenden 41a, 41b befindenden Zwischenposition 41c, welche sich in einen Abstand vom zweiten Längsende 41b befindet, der etwa 1/3 der Gesamtlänge des Schneidmessers 41 beträgt, bis zu seinem ersten Längsende 41a hin in Längsrichtung LR der Fördertrommel 20 gesehen eine imaginäre Rechteckform, deren lange Seiten jeweils in einer der beiden Längsseiten 42a, 42b des Schneidmessers 41 enthalten sind. Außerdem weist eine das erste Längsende 41a des Schneidmessers 41 definierende kurze Seite der Rechteckform einen konvexen Krümmungsradius auf, welcher einem Schwenkradius des Schneidmessers 41 um seine Schwenkachse A2 entspricht.

Das Schneidmesser weist an seiner der Fördertrommel 20 zugewandten ersten Längsseite 42a eine in den Förderkanal 11 hineinragende erste Schneide 43a auf, die eine vorbestimmte Längenabmessung entlang der ersten Längsseite 42a hat und die entlang ihrer Längenabmessung konkav gekrümmt ist. Genauer erstreckt sich die Längenabmessung der ersten Schneide 43a von der Zwischenposition 41c aus bis zum ersten Längsende 41a des Schneidmessers 41 hin.

An der zweiten Längsseite 42b des Schneidmessers 41 ist bezüglich einer Längsmittelachse A3 dessen spiegelsymmetrisch zur in den Förderkanal 11 hineinragenden ersten Schneide 43a eine zweite Schneide 43b vorgesehen, deren Längenabmessung sich von der Zwischenposition 41c aus bis zum ersten Längsende 41a des Schneidmessers 41 hin erstreckt und die entlang ihrer Längenabmessung konkav gekrümmt ist.

Wie aus Fig. 1 ersichtlich, sind die konkaven Konturen der ersten und zweiten Schneiden 43a, 43b dabei so gewählt, dass das Schneidmesser 41 sowohl an der Zwischenposition 41c als auch am ersten Längsende 41a dessen die gleiche volle Breite aufweist. Hinsichtlich der Spiegelsymmetrie bzw. Achsensymmetrie der beiden Schneiden 43a, 43b ist als Abweichung davon noch zu erwähnen, dass eine Zackung bzw. Riffelung dieser wegen des Wendeeinsatzes der Schneiden 43a, 43b auf unterschiedlichen Flächenseiten des Schneidmessers 41 vorgesehen ist.

Wie aus den Figuren 1 und 2 ersichtlich, steht jedes Schneidmesser 41 in seiner Schneidposition sowohl an seinem ersten Längsende 41a als auch entlang der Längenabmessung seiner ersten Schneide 43a mit der jeweils zugehörigen Öffnung 32 in dem Leitelement 31 in Eingriff bzw. greift in diese ein, so dass das das Schneidmessers 41 von der Zwischenposition 41c aus diagonal verlaufend bis zum ersten Längsende 41a hin in Längsrichtung LR der Fördertrommel 20 beidseitig von dem Leitelement 31 abgestützt ist. Mit anderen Worten steht das Schneidmesser 41 über seine gesamte in den Förderkanal 11 hineinragende Längenabmessung mit der jeweils zugehörigen Öffnung 32 im Leitelement 31 in Eingriff bzw. greift in diese ein.

Der Kniehebelmechanismus 50 jeder Schneideinheit 40 ist auf der der Fördertrommel 20 abgewandten Seite des Leitelements 31 angeordnet und mit dem Schneidmesser 41 der betreffenden Schneideinheit 40 so verbunden, dass das Schneidmesser 41 von dem Kniehebelmechanismus 50 in Schwenkrichtung zu seiner in den Figuren 1 und 2 gezeigten Schneidposition hin (in den Figuren 1 und 2 nach links) elastisch mit einer bevorzugt einstellbaren Vorspannkraft vorgespannt ist, um ein elastisches Ausweichen des Schneidmessers 41 in die Ausweichposition (nach rechts in den Figuren 1 und 2) bei Kontakt dessen mit in den Förderkanal 11 gelangten Fremdkörpern zu ermöglichen.

Jeder Kniehebelmechanismus 50 weist zwei Kniehebel 51, 52 auf, welche über ein Knickgelenk 53 an jeweiligen Längsenden dieser miteinander um eine sich in Längsrichtung LR bzw. der Drehachse A1 der Fördertrommel 20 erstreckende erste Kniehebelachse A4 schwenkbar miteinander verbunden sind, wobei das Knickgelenk 53 in einer in den Figuren 1 und 2 gezeigten Gestrecktstellung der Kniehebel 51, 52 auf Anschlag gestellt und der Kniehebelmechanismus 50 über Vorspannmittel in Form einer Zugfeder 54 zum Anschlag des Knickgelenks 53 hin in die Gestrecktstellung vorspannt ist.

Ein dem Knickgelenk 53 abgewandtes Längsende des einen Kniehebels 52 ist um eine zur ersten Kniehebelachse A4 parallele zweite Kniehebelachse A5 schwenkbar am Gehäuse 30 des Schneidwerks 10 festgelegt, wohingegen ein dem Knickgelenk 53 abgewandtes Längsende des anderen Kniehebels 51 um eine zur ersten Kniehebelachse A4 parallele dritte Kniehebelachse A6 schwenkbar mit einem drehfest an die Messeraufnahme 60 des Schneidmessers 41 angebundenen Hebel 55 verbunden ist, so dass ein in Richtung zur der Fördertrommel 20 abgewandten Seite des Leitelements 31 hin Verschwenken des Schneidmessers 41 (in die Ausweichposition oder die Außerbetriebsposition) ein aus der Gestrecktstellung im Knickgelenk 53 Einknicken der Kniehebel 51, 52 des Kniehebelmechanismus 50 gegen die Vorspannung der Zugfeder 54 bewirkt.

Obwohl in den Figuren 1 und 2 nicht gezeigt, sind außerdem für jede Schneideinheit 40 Stellmittel vorgesehen, über welche selektiv ein Verschwenken von deren Schneidmesser 41 zwischen der Schneidposition und der Außerbetriebsposition antreibbar ist.

### Bezugszeichenliste

- 1: Erntemaschine
- 10: Schneidwerk
- 11: Förderkanal
- 11a: Eingang
- 11b: Ausgang
- 20: Fördertrommel
- 21: Außenumfang
- 23: Mitnehmerscheibe
- 24: Mitnehmerzinke (Förderelement)
- 25: Mitnehmerscheibenpaar
- 26: Hüllzylinder
- 30: Gehäuse
- 31: Leitelement
- 32: Öffnung
- 40: Schneideinheit
- 41: Schneidmesser
- 41a, 41b: Längsenden
- 41c: Zwischenposition
- 42a, 42b: Längsseiten
- 43a, 43b: Schneiden
- 50: Kniehebelmechanismus
- 51, 52: Kniehebel
- 53: Knickgelenk
- 54: Zugfeder (Vorspannmittel)
- 55: Hebel
- 60: Messeraufnahme
- A1: Drehachse
- A2: Schwenkachse
- A3: Längsmittelachse
- A4: Kniehebelachse
- A5: Kniehebelachse
- A6: Kniehebelachse
- LR: Längsrichtung

## Patentansprüche

1. Schneidwerk (10) für eine Erntemaschine 1, aufweisend:
eine Fördertrommel (20), die drehbar gelagert ist und die um einen Außenumfang (21) dieser verteilt eine Mehrzahl von nach radial außen vorstehenden Förderelementen (24) aufweist, welche zusammen einen Hüllzylinder (26) der Fördertrommel (20) definieren,
ein Leitelement (31), das sich so über eine Länge des Hüllzylinders (26) und bogenförmig um einen Sektor eines Außenumfangs des Hüllzylinders (26) erstreckt, dass zwischen dem Außenumfang (21) der Fördertrommel (20) und dem Leitelement (31) ein Förderkanal (11) für Erntegut gebildet ist, und
mindestens eine Schneideinheit (40) mit einem länglichen Schneidmesser (41), das sich in einer Schneidposition dessen von einer der Fördertrommel (20) abgewandten Seite des Leitelements (31) aus längsseits durch eine Öffnung (32) in dem Leitelement (31) hindurch in den Förderkanal (11) hinein erstreckt, um unter Zusammenwirkung mit den Förderelementen (24) das Erntegut zu zerschneiden, wobei
das Schneidmesser (41) in seiner Schneidposition an einem in den Förderkanal (11) hineinragenden ersten Längsende (41a) dessen in die Öffnung (32) in dem Leitelement (31) eingreift, so dass das erste Längsende (41a) des Schneidmessers (41) in einer Längsrichtung (LR) der Fördertrommel (20) beidseitig von dem Leitelement (31) abgestützt ist und das Schneidmesser (41) an einer der Fördertrommel (20) zugewandten ersten Längsseite (42a) dessen eine in den Förderkanal (11) hineinragende Schneide (43a) vorbestimmter Längenabmessung entlang der ersten Längsseite (42a) aufweist, und wobei das Schneidmesser (41) entlang der Längenabmessung der Schneide (43a) in die Öffnung (32) in dem Leitelement (31) eingreift, so dass das Schneidmesser (41) entlang der Längenabmessung der Schneide (43a) in Längsrichtung (LR) der Fördertrommel (20) beidseitig von dem Leitelement (31) abgestützt ist, **dadurch gekennzeichnet, dass** das Schneidmesser (41) eine der Fördertrommel (20) abgewandte zweite Längsseite (42b) aufweist, welche sich in der Schneidposition des Schneidmessers (41) vollständig auf der der Fördertrommel (20) abgewandten Seite des Leitelements (31) befindet und an der zweiten Längsseite (42b) des Schneidmessers (41) bezüglich einer Längsmittelachse (A3) dessen spiegelsymmetrisch zur in den Förderkanal (11) hineinragenden Schneide (43a) eine zweite Schneide (43b) vorgesehen ist, wobei das Schneidmesser (41) ein sich auf der der Fördertrommel (20) abgewandten Seite des Leitelements (31) befindendes zweites Längsende (41b) aufweist, und das Schneidmesser (41) ausgehend von einer sich zwischen seinen ersten und zweiten Längsenden (41a, 41b) befindenden Zwischenposition (41c) bis zu seinem ersten Längsende (41a) hin in Längsrichtung LR der Fördertrommel 20 gesehen eine Rechteckform definiert, deren lange Seiten jeweils in einer der beiden Längsseiten (42a, 42b) des Schneidmessers (41) enthalten sind.

2. Schneidwerk (10) gemäß Anspruch 1, wobei das Schneidmesser (41) an seinem zweiten Längsende (41b) auf einer sich in Längsrichtung (LR) der Fördertrommel (20) erstreckenden Schwenkachse (A2) schwenkbar gelagert ist, so dass das Schneidmesser (41) aus der Schneidposition heraus durch die Öffnung (32) im Leitelement (31) hindurch in Richtung zur der Fördertrommel (20) abgewandten Seite des Leitelements (31) hin verschwenkbar ist, und wobei eine das erste Längsende (41a) des Schneidmessers (41) definierende kurze Seite der Rechteckform einen konvexen Krümmungsradius aufweist, welcher einem Schwenkradius des Schneidmessers (41) um die Schwenkachse (A2) entspricht.

3. Schneidwerk (10) gemäß Anspruch 2, wobei sich die in den Förderkanal (11) hineinragende Schneide (43a) von der Zwischenposition (41c) aus bis zum ersten Längsende (41a) des Schneidmessers (41) hin erstreckt.

4. Schneidwerk (10) gemäß Anspruch 2 oder 3, wobei die in den Förderkanal (11) hineinragende Schneide (43a) entlang ihrer Längenabmessung konkav gekrümmt ist.

5. Schneidwerk (10) gemäß einem der Ansprüche 2 bis 4, wobei die mindestens eine Schneideinheit (40) einen Kniehebelmechanismus (50) aufweist, welcher auf der der Fördertrommel (20) abgewandten Seite des Leitelements (31) angeordnet ist und welcher mit dem Schneidmesser (41) verbunden ist, so dass das Schneidmesser (41) von dem Kniehebelmechanismus (50) in Schwenkrichtung zu seiner Schneidposition hin vorgespannt ist.

6. Schneidwerk (10) gemäß einem der Ansprüche 1 bis 5, wobei mehrere wie die mindestens eine Schneideinheit (40) ausgebildete Schneideinheiten (40) vorgesehen sind, welche in Längsrichtung (LR) der Fördertrommel (20) mit jeweiligem Abstand voneinander nebeneinanderliegend angeordnet sind.

## Claims

1. A cutting assembly (10) for a harvester (1) comprising:
a conveyor drum (20) which is mounted rotatably and which distributed around an outer periphery has a plurality of radially outwardly projecting conveyor elements (24) which together define an envelope cylinder (26) of the conveyor drum (20),
a guide element (31) which extends over a length of the envelope cylinder (26) and in an arcuate shape around a sector of an outer periphery of the envelope cylinder (26) in such a way that a conveyor passage (11) for crop is formed between the outer periphery (21) of the conveyor drum (20) and the guide element (31), and
at least one cutting unit (40) having an elongate cutting blade (41) which in a cutting position thereof extends from a side of the guide element (31), that faces away from the conveyor drum (20) alongside through an opening (32) in the guide element (31) into the conveyor passage (11) to cut up the crop in cooperation with the conveyor elements (24), wherein
in its cutting position the cutting blade (41) at a first longitudinal end (41a) thereof, that projects into the conveyor passage (11), engages into the opening (32) in the guide element (31) so that the first longitudinal end (41a) of the cutting blade (41) is supported at both sides by the guide element (31) in a longitudinal direction (LR) of the conveyor drum (20) and the cutting blade (41) at a first longitudinal side (41a) thereof, that faces towards the conveyor drum (20), has a cutting edge (43a) which projects into the conveyor passage (11) and which is of a predetermined length dimension along the first longitudinal side (42a), and wherein the cutting blade (41) engages along the longitudinal dimension of the cutting edge (43a) into the opening (32) in the guide element (31) so that the cutting blade (41) is supported at both sides by the guide element (31) along the longitudinal dimension of the cutting edge (43a) in the longitudinal direction (LR) of the conveyor drum (20), **characterised in that** the cutting blade (41) has a second longitudinal side (42b) which faces away from the conveyor drum (20) and which in the cutting position of the cutting blade (40) is disposed completely on the side of the guide element (31), that faces away from the conveyor drum (20), and a second cutting edge (43b) is provided at the second longitudinal side (42b) of the cutting blade (41) in relation to a longitudinal centre line (A3) thereof in mirror-symmetrical relationship with the cutting edge (43a) which projects into the conveyor passage (11), wherein the cutting blade (41) has a second longitudinal end (41b) which is on the side of the guide element (31), that faces away from the conveyor drum (20), and the cutting blade (41) starting from an intermediate position (41c) between its first and second longitudinal ends (41a, 41b) towards its first longitudinal end (41a) as viewed in the longitudinal direction (LR) of the conveyor drum (20) defines a rectangular shape whose long sides are respectively contained in one of the two longitudinal sides (42a, 42b) of the cutting blade (41).

2. A cutting assembly (10) according to claim 1 wherein the cutting blade (41) is mounted pivotably at its second longitudinal end (41b) on a pivot axis (A2) extending in the longitudinal direction (LR) of the conveyor drum (20) so that the cutting blade (41) is pivotable out of the cutting position through the opening (32) in the guide element (31) in the direction towards the side of the guide element (31), that faces away from the conveyor drum (20), and wherein a short side of the rectangular shape that defines the first longitudinal end (41a) of the cutting blade (41) has a convex radius of curvature corresponding to a pivotal radius of the cutting blade (41) about the pivot axis (A2).

3. A cutting assembly (10) according to claim 2 wherein the cutting edge (43a) which projects into the conveyor passage (11) extends from the intermediate position (41c) to the first longitudinal end (41a) of the cutting blade (41).

4. A cutting assembly (10) according to claim 2 or claim 3 wherein the cutting edge (43a) which projects into the conveyor passage (11) is concavely curved along its longitudinal dimension.

5. A cutting assembly (10) according to one of claims 2 to 4 wherein the at least one cutting unit (40) has an elbow lever mechanism (50) which is arranged on the side of the guide element (41), that faces away from the conveyor drum (20), and which is connected to the cutting blade (41) so that the cutting blade (41) is biased in the pivotal direction towards its cutting position by the elbow lever mechanism (50).

6. A cutting assembly (10) according to one of claims 1 to 5 wherein there are provided a plurality of cutting units (40) which are like the at least one cutting unit (40) and which are arranged in mutually juxtaposed relationship at respective spacings from each other in the longitudinal direction (LR) of the conveyor drum (20).

## Revendications

1. Tablier de coupe (10) pour une machine de récolte 1, comprenant :
un tambour de convoyage (20) qui est monté à rotation et qui comporte, répartie autour d'une périphérie extérieure (21) de celui-ci, une pluralité d'éléments de convoyage (24) qui font saillie radialement vers l'extérieur et qui définissent ensemble un cylindre d'enveloppe (26) du tambour de convoyage (20),
un élément de guidage (31) qui s'étend sur une longueur du cylindre d'enveloppe (26) et en arc autour d'un secteur d'une périphérie extérieure du cylindre d'enveloppe (26), de façon à former, entre la périphérie extérieure (21) du tambour de convoyage (20) et l'élément de guidage (31), un canal d'alimentation (11) pour le produit récolté, et
au moins une unité de coupe (40) avec un couteau allongé (41) qui, dans une position de coupe de celle-ci, s'étend longitudinalement, à partir d'un côté de l'élément de guidage (31) situé à l'opposé du tambour de convoyage (20), dans le canal d'alimentation (11) à travers une ouverture (32) ménagée dans l'élément de guidage (31) afin de fragmenter le produit récolté en coopérant avec les éléments de convoyage (24),
le couteau (41) pénétrant, en position de coupe, au niveau de sa première extrémité longitudinale (41a) engagée dans le canal d'alimentation (11), dans l'ouverture (32) ménagée dans l'élément de guidage (31), de sorte que la première extrémité longitudinale (41a) du couteau (41) est supportée des deux côtés par l'élément de guidage (31) dans une direction longitudinale (LR) du tambour de convoyage (20) et que le couteau (41), sur un premier côté longitudinal (42a) de celui-ci tourné vers le tambour de convoyage (20), comporte, le long du premier côté longitudinal (42a), un tranchant (43a) de dimension longitudinale prédéterminée qui pénètre dans le canal d'alimentation (11), et le couteau (41) pénétrant, selon la dimension longitudinale du tranchant (43a), dans l'ouverture (32) ménagée dans l'élément de guidage (31), de sorte que, selon la dimension longitudinale du tranchant (43a), le couteau (41) est supporté des deux côtés par l'élément de guidage (31) dans la dimension longitudinale (LR) du tambour de convoyage (20), **caractérisé en ce que** le couteau (41) comporte un second côté longitudinal (42b) qui est situé à l'opposé du tambour de convoyage (20) et qui, dans la position de coupe du couteau (41), se trouve entièrement sur le côté de l'élément de guidage (31) situé à l'opposé du tambour de convoyage (20), et **en ce que** sur le second côté longitudinal (42b) du couteau (41) est prévu un second tranchant (43b) avec, par rapport à un axe médian longitudinal (A3) de celui-ci, une symétrie spéculaire au tranchant (43a) pénétrant dans le canal d'alimentation (11), le couteau (41) possédant une seconde extrémité longitudinale (41b) qui se trouve sur le côté de l'élément de guidage (31) situé à l'opposé du tambour de convoyage (20), et le couteau (41) définissant à partir d'une position intermédiaire (41c) située entre ses première et seconde extrémités longitudinales (41a, 41b) jusqu'à sa première extrémité longitudinale (41a), vue dans la direction longitudinale LR du tambour de convoyage 20, une forme rectangulaire dont les grands côtés sont chacun inclus dans un des deux côtés longitudinaux (42a, 42b) du couteau (41).

2. Tablier de coupe (10) selon la revendication 1, le couteau (41) étant monté pivotant à sa seconde extrémité longitudinale (41b) sur un axe de pivotement (A2) s'étendant dans la direction longitudinale (LR) du tambour de convoyage (20), de sorte qu'à partir de la position de coupe le couteau (41) peut pivoter à travers l'ouverture (32) ménagée dans l'élément de guidage (31) en direction du côté de l'élément de guidage (31) situé à l'opposé du tambour de convoyage (20), et un petit côté de la forme rectangulaire définissant la première extrémité longitudinale (41a) du couteau (41) présentant un rayon de courbure convexe qui correspond à un rayon de pivotement du couteau (41) autour de l'axe de pivotement (A2).

3. Tablier de coupe (10) selon la revendication 2, le tranchant (43a) qui pénètre dans le canal d'alimentation (11) s'étendant de la position intermédiaire (41c) jusqu'à la première extrémité longitudinale (41a) du couteau (41).

4. Tablier de coupe (10) selon la revendication 2 ou 3, le tranchant (43a) qui pénètre dans le canal d'alimentation (11) présentant une courbure concave le long de sa dimension longitudinale.

5. Tablier de coupe (10) selon une des revendications 2 à 4, la au moins une unité de coupe (40) comportant un mécanisme à genouillère (50) qui est disposé sur le côté de l'élément de guidage (31) situé à l'opposé du tambour de convoyage (20) et qui est relié au couteau (41), de façon que le couteau (41) soit précontraint par le mécanisme à genouillère (50) dans la direction de pivotement vers une position de coupe.

6. Tablier de coupe (10) selon une des revendications 1 à 5, **caractérisé en ce qu'**il est prévu plusieurs unités de coupe (40) conçues comme la au moins une unité de coupe (40) et disposées côte à côte dans la direction longitudinale (LR) du tambour de convoyage (20) avec un espace correspondant entre elles.
